(19) Europäisches Patentamt
European Patent Office
Office européen des brevets

(11) EP 2 719 728 A1

(12) EUROPÄISCHE PATENTANMELDUNG

(43) Veröffentlichungstag:
**16.04.2014 Patentblatt 2014/16**

(21) Anmeldenummer: **13188070.0**

(22) Anmeldetag: **10.10.2013**

(51) Int Cl.:
***C08L 77/00** (2006.01)* ***C08L 77/02** (2006.01)*
*C08L 23/26 (2006.01)* *C08L 51/06 (2006.01)*
*C08F 255/02 (2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.10.2012 EP 12187875**

(71) Anmelder: **LANXESS Deutschland GmbH**
**50569 Köln (DE)**

(72) Erfinder:
- **Margraf, Günter**
**41539 Dormagen (DE)**
- **Joachimi, Detlev**
**47800 Krefeld (DE)**

(54) **Formmassen**

(57) Diese Erfindung betrifft Polyamid-Formmassen mit hoher Beständigkeit gegen Heisslichtalterung.

EP 2 719 728 A1

## Beschreibung

Diese Erfindung betrifft Polyamid-Formmassen mit hoher Beständigkeit gegen Heisslichtalterung, enthaltend wenigstens ein mit Maleinsäureanhydrid gepfropftes Ethylen-Butylen-Copolymer.

Unter der Einwirkung von UV-Licht und Luftsauerstoff finden an der Oberfläche von Polyamiden photooxidative Reaktionen statt, in deren Folge das visuelle Erscheinungsbild und die mechanischen Eigenschaften Polyamid-basierter Erzeugnisse beeinträchtigt werden. Bei der Lagerung von Polyamid-Erzeugnissen in Räumen, in die UV-Licht durch Fensterglas gelangt, spricht man von UV-Lichtstabilität. Sind die Polyamidbasierten Erzeugnisse dagegen im Freien gelagert, wo größere Feuchtigkeits- und Temperaturschwankungen auftreten (Tag/Nacht, Regen), so spricht man von Witterungsbeständigkeit. Die photooxidativen Prozesse verlaufen bei künstlicher Bewitterung deutlich schneller, als bei UV-Belichtung alleine (Kunststoff-Handbuch 3/4, Polyamide, Carl Hanser Verlag, München 1998, Seiten 16, 82-84; Nylon Plastics Handbook, Hanser-Verlag München 1995, Seiten 340-342).

Die Witterungsbeständigkeit von Polyamiden kann durch Zugabe von Rußen signifikant verbessert werden (Nylon Plastics Handbook, Hanser-Verlag München 1995, Seiten 537-538).

Die Empfehlung VDA 75202 des Verbandes der Automobilindustrie e.V. beschreibt Prüfverfahren zur Bestimmung der Widerstandsfähigkeit der Farbe und des Alterungsverhaltens von gefärbten oder bedruckten organischen Werkstoffen jeder Art und in allen Verarbeitungszuständen gegen die Einwirkung von künstlichem Licht, das der Normlichtart D 65 (Tageslicht) nach DIN 5033-7, jedoch hinter Fensterglas, entspricht, und gegen gleichzeitige Hitzeeinwirkung. Die Prüfverfahren berücksichtigen besonders die Licht- und Wärmezustände, wie sie im Inneren eines Kraftfahrzeuges auftreten.

Die VDA 75202 offenbart die folgenden Verfahren zur Bestimmung der Farbechtheit unter Expositionsbedingung A (Prüfung VDA 75 202-2 A) sowie die Bestimmung des Alterungsverhaltens unter Expositionsbedingung A und 4 Expositionsperioden (Prüfung VDA 75 202-3 A4):

- Zur Bestimmung der Farbechtheit, als "Verfahren 2" bezeichnet, werden Proben des zu untersuchenden Materials unter festgelegten Bedingungen zusammen mit blauen Lichtechtheitstypen aus Wollgewebe dem künstlichen Licht ausgesetzt. Die Farbechtheit wird bewertet, indem man die Änderung der Farbe der Probe mit der der verwendeten Lichtechtheitstypen vergleicht. Auch eine Bewertung mittels Graumaßstab ist möglich.
- Zur Bestimmung des Alterungsverhaltens, als "Verfahren 3" bezeichnet, werden Proben des zu untersuchenden Materials unter festgelegten Bedingungen zusammen mit einem Lichtechtheitstyp 6 dem künstlichen Licht ausgesetzt. Die Änderung der Farbe der Probe wird durch Vergleich mit dem Graumaßstab für die Bewertung der Änderung der Farbe oder mit Hilfe eines Farbmessgerätes bewertet.

Expositionen gemäß VDA 75202 werden in klimatisierten Prüfkammern aus korrosionsbeständigen Werkstoffen durchgeführt, in der sich die optische Strahlenquelle mit Filtersystem und die Halterungen für die Probekörper befinden. Als optische Strahlungsquelle werden Xenonbogenstrahler mit optischen Strahlungsfiltern verwendet.

Blends aus Polyamiden und Elastomeren zeigen eine hohe Schlagzähigkeit im spritzfrischen Zustand und bei tiefen Temperaturen. Hierfür ist die chemische Ankoppelung des Elastomers an die Polyamidmatrix durch funktionelle Gruppen wie Carbonsäuregruppen, Carbonsäureestergruppen oder Anhydridgruppen und die Bildung einer feinteiligen und gleichmäßigen Elastomerverteilung erforderlich. Daher werden Elastomere, insbesondere auf Basis von Polyolefinen sowie Butadien- und Acrylatpfropfkautschuken, mit Carbonsäuregruppen, Carbonsäureestergruppen oder Anhydridgruppen verwendet (Nylon Plastics Handbook, Hanser-Verlag München 1995, Seiten 415-422; Kunststoff-Handbuch 3/4, Polyamide, Carl Hanser Verlag, München 1998, Seiten 16, 133-138).

Die Verwendung von Maleinsäureanhydrid-funktionalisierten Ethylen-Propylen-Copolymeren zur Schlagzähmodifizierung von Polyamiden stellt eine etablierte Methode dar (Nylon Plastics Handbook, Hanser-Verlag München 1995, Seiten 415-419). Maleinsäure-anhydrid-funktionalisierte Ethylen-Propylen-Copolymere zur Schlagzähmodifizierung von Polyamid sind kommerziell verfügbar, unter anderem von ExxonMobil Chemical Europe (Exxelor® VA1801) und Lanxess Deutschland GmbH (Keltan® 2708R).

Neben der Verwendung von Maleinsäureanhydrid gepfropften Ethylen-Propylen-Copolymeren wurde auch die Verwendung von Maleinsäureanhydrid-funktionalisierten Ethylen-(1-Octen)-Copolymeren zur Schlagzähmodifizierung (US-A 5705565) sowie die Verwendung von Mischungen aus Ethylen-$\alpha$-Olefin-Copolymeren und aus Maleinsäureanhydrid-funktionalisierten Ethylen-$\alpha$-Olefin-Copolymeren (WO99/60062 A1) zur Schlagzähmodifizierung von Polyestern beschrieben.

Die Aufgabe der vorliegenden Erfindung bestand darin, eine Polyamid-Formmasse mit einer gegenüber dem Stand der Technik verbesserten Beständigkeit gegen Heisslichtalterung bereitzustellen.

Die Heisslichtalterung im Sinne der vorliegenden Erfindung ist eine Alterung gemäß Prüfung VDA 75 202-3 A4.

Die Beständigkeit gegen Heisslichtalterung im Sinne der vorliegenden Erfindung wird ermittelt an gemäß VDA 75 202-3 A4 gealterten Probekörpern. An den Probekörpern wird vor und nach Heisslichtalterung (VDA 75 202-3 A4)

eine Farbmessung gemäß DIN 6167 (Normlichtart D65, Normalbeobachter 10°) mit einem Spectrophotometer CM-2600d von Konica Minolta durchgeführt und der a,b-Farbabstand $\Delta E_{ab}$* bestimmt.

Der L*a*b*-Farbraum ist ein Farbraum, der den Bereich der wahrnehmbaren Farben abdeckt. Eine der wichtigsten Eigenschaften des L*a*b*-Farbmodells ist seine Geräteunabhängigkeit, das heißt, die Farben werden unabhängig von der Art ihrer Erzeugung und Wiedergabetechnik definiert. Das Farbmodell ist in der EN ISO 11664-4 genormt.

Der L*a*b*-Farbraum wird durch ein dreidimensionales Koordinatensystem beschrieben. Die a*-Achse beschreibt den Grün- oder Rotanteil einer Farbe, wobei negative Werte für Grün und positive Werte für Rot stehen (CIELAB-Koordinate a*). Die b*-Achse beschreibt den Blau- oder Gelbanteil einer Farbe, wobei negative Werte für Blau und positive Werte für Gelb stehen (CIELAB-Koordinate *b**). Die L*-Achse beschreibt die Helligkeit (Luminanz) der Farbe (CIELAB-Helligkeit).

Der a,b-Farbabstand CIE 1976, $\Delta E_{ab}$*, zwischen zwei Farbreizen wird berechnet als euklidischer Abstand zwischen den sie repräsentierenden Punkten im Farbenraum:

$$\Delta E_{ab}{}^* = [(\Delta L^*)^2 + (\Delta a^*)^2 + (\Delta b^*)^2]^{1/2} ,$$

wobei $\Delta L^*$ die CIELAB-Helligkeits-Differenz, $\Delta a^*$ den Abstand der CIELAB-Koordinaten $a^*$ und $\Delta b^*$ den Abstand der CIELAB-Koordinaten $b^*$ beschreiben. Im Rahmen der vorliegenden Erfindung wurde an Probekörpern vor Heisslichtalterung und nach zwei beziehungsweise nach vier Belichtungsperioden initiierter Heisslichtalterung (VDA 75 202-3 A4) eine Farbmessung gemäß DIN 6167 (Normlichtart D65, Normalbeobachter 10°) mit einem Spectrophotometer CM-2600d von Konica Minolta durchgeführt und jeweils der a,b-Farbabstand $\Delta E_{ab}$* nach zwei beziehungsweise vier Belichtungsperioden Heisslichtalterung im Vergleich zum Ausgangszustand vor der Heisslichtalterung bestimmt.

Eine hohe Beständigkeit gegen Heisslichtalterung im Sinne der vorliegenden Erfindung bedeutet ein gegenüber dem oben zitierten Stand der Technik um mindestens 10%, bevorzugt um mindestens 20%, insbesondere bevorzugt um mindestens 30% reduzierter a,b-Farbabstand $\Delta E_{ab}$*.

Erfindungsgemäß umfasst der Begriff Formmassen die für den Spritzguss einzusetzenden Granulate.

Es wurde nun überraschend gefunden, dass Formmassen enthaltend die Kombination von

A) 38 bis 90 Gew.-%, bevorzugt 45 bis 85 Gew.-%, wenigstens eines Polyamids mit einer Viskositätszahl VN von 130 bis 160 ml/g gemäß DIN EN ISO 307 in Schwefelsäure,
B) 5 bis 45 Gew.-%, bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, wenigstens eines Copolymers auf Basis von Ethylen und Butylen, das durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden ist, wobei die Summe der Gewichtsprozente aus A), B) und C) stets 100 ergibt, eine hohe Beständigkeit gegen Heisslichtalterung aufweisen.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind. Zur Klarstellung sei hier ferner angemerkt, dass die Kombination aus A), B) und C) 95 bis 99,9 Gew.-%, bevorzugt 97 bis 99,9 Gew.-%, besonders bevorzugt 98 bis 99,9 Gew.-% der Formmassen ausmacht und die verbleibenden 0,1 bis 5 Gew.-%, bevorzugt 0,1 bis 3 Gew.-% besonders bevorzugt 0,1 bis 2 Gew.-% übliche Additive oder Stabilisatoren sind.

Gegenstand der vorliegenden Erfindung sind deshalb Formmassen enthaltend die Kombination von

A) 38 bis 90 Gew.-%, bevorzugt 45 bis 85 Gew.-%, wenigstens eines Polyamids mit einer Viskositätszahl VN von 130 bis 160 ml/g gemäß DIN EN ISO 307 in Schwefelsäure,
B) 5 bis 45 Gew.-%, bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, wenigstens eines Copolymers auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind, wobei die Summe aller Gewichtsprozente in der Formmasse stets 100 ergibt.

In einer Ausführungsform enthalten die Formmassen die Kombination von

A) 38 bis 90 Gew.-%, bevorzugt 45 bis 85 Gew.-%, wenigstens eines Polyamids mit einer Viskositätszahl VN von 130 bis 160 ml/g gemäß DIN EN ISO 307 in Schwefelsäure,

B) 5 bis 45 Gew.-%, bevorzugt 7 bis 40 Gew.-%, ganz besonders bevorzugt 10 bis 20 Gew.-% wenigstens einer Form von Glasfasern, und

C) 5 bis 17 Gew.-%, bevorzugt 8 bis 15 Gew.-%, wenigstens eines Copolymers auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind, wobei die Summe aller Gewichtsprozente in der Formmasse stets 100 ergibt und die Kombination aus A), B) und C) bevorzugt 95 bis 99,9 Gew.-%, besonders bevorzugt 97 bis 99,9 Gew.-%, ganz besonders bevorzugt 98 bis 99,9 Gew.-% der Formmassen ausmacht.

In bevorzugten Ausführungsformen enthalten die Formmassen neben der Kombination von A), B) und C) 0,1 bis 5 Gew.-%, besonders bevorzugt 0,1 bis 3 Gew.-%, ganz besonders bevorzugt 0,1 bis 2 Gew.-% übliche Additive oder Stabilisatoren.

In einer bevorzugten Ausführungsform der vorliegenden Erfindung enthalten die erfindungsgemäßen Formmassen neben der Kombination der Komponenten A), B) und C) noch zusätzlich 0,1 bis 2,0 Gew.-%, besonders bevorzugt 0,5 bis 1,5 Gew.-% wenigstens eines Stabilisators D) wobei die Mengen von einer oder mehrerer der Komponenten A), B) und C) so reduziert werden, dass die Summe aller Gewichtsprozente in der Formmasse stets 100 ergibt.

In einer weiteren bevorzugten Ausführungsform der vorliegenden Erfindung enthalten die erfindungsgemäßen Formmassen neben der Kombination der Komponenten A), B), C) und D) oder anstelle von D) noch zusätzlich 0,1 bis 4 Gew.-%, besonders bevorzugt 0,2 bis 2,0 Gew.-% wenigstens eines sonstigen Additivs E), wobei die Mengen von einer oder mehrerer der Komponenten A), B), C) und/oder D) so reduziert werden, dass die Summe aller Gewichtsprozente in der Formmasse stets 100 ergibt.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung der in den Formmassen einzusetzenden Polyamide verlaufen bevorzugt über die Polykondensation in der Schmelze. Erfindungsgemäß wird hierunter auch die hydrolytische Polymerisation von Lactamen als Polykondensation verstanden. Die Herstellung von Polyamiden durch thermische Polykondensation ist dem Fachmann bekannt, siehe auch Nylon Plastics Handbook, Hanser-Verlag München 1995, Seiten 17-27 und Kunststoff-Handbuch 3/4, Polyamide, Carl Hanser Verlag, München 1998, Seiten 22-36.

Erfindungsgemäß bevorzugt einzusetzende Polyamide sind teilkristalline, aliphathische Polyamide, die ausgehend von Diaminen und Dicarbonsäuren und/oder Lactamen mit wenigstens 5 Ringgliedern oder entsprechenden Aminosäuren hergestellt werden können, und die eine Viskositätszahl VN gemäß DIN EN ISO 307 in Schwefelsäure von 130 bis 160 ml/g, besonders bevorzugt von 130 bis 155 ml/g, ganz besonders bevorzugt von 140 bis 150 ml/g aufweisen.

Die Viskositätszahl VN ist die unter Normbedingungen ermittelte relative Erhöhung der Viskosität eines Lösungsmittels durch 0,1-1,0 g/100 ml gelöstes Polymer, geteilt durch die Konzentration in g/100ml. In diesem Zusammenhang häufig angewandte Normen sind DIN 53727, ISO 307, ASTM D 2117, wobei im Rahmen der vorliegenden Erfindung die VN nach ISO 307 bestimmt wurde. Die Bestimmung der Viskositätszahl VN erfolgt erfindungsgemäß in handelsüblicher Schwefelsäure 95% bis 98% und durch Einstellung auf 96%. Bei diesem Verfahren wird die Lösungsviskosität des Polyamids als Viskositätszahl in Schwefelsäure im Ubbelohde-Viskosimeter bestimmt.

Die Verwendung von Kettenreglern während der Polymerisation sowie die Festphasennachkondensation als Methoden zur Herstellung von Polyamiden mit einer definierten Viskositätszahl VN bzw. einer definierten relativen Viskosität sind dem Fachmann bekannt (Kunststoff-Handbuch 3/4, Polyamide, Carl Hanser Verlag, München 1998, Seiten 25-36, 65-73).

Erfindungsgemäß bevorzugt einzusetzende teilkristalline, aliphatische Polyamide mit einer Viskositätszahl VN von 130 bis 160 ml/g gemäß DIN EN ISO 307 in Schwefelsäure sind bevorzugt zugänglich durch das in DE19801267 A1 beschriebene Verfahren.

DE19801267 A1 beschreibt die Einstellung einer definierten Endviskosität mittels Regulierung des Wassergehaltes in der Schmelze durch entsprechende Temperierung des oder der Reaktoren im Bereich 0,1 bis 0,4 Gew.-%. Die Polymerisationstemperaturen werden dabei im Bereich von 230 bis 280 °C gehalten.

DE19801267 A1 offenbart ein Verfahren zur Herstellung von Polyamid-Granulat auf Basis von Polyamid 6 (PA-6) mit einer relativen Lösungsviskosität von 2,2 bis 4,8 (1 g PA-6 in 100 ml 96 %iger Schwefelsäure bei 25 °C gemessen) durch hydrolytische Polymerisation von Caprolactam in Gegenwart von Dicarbonsäuren als Kettenregler, anschließende Verarbeitung der Polymerschmelze zu Granulat, Extraktion der niedermolekularen Anteile aus dem Granulat mit Wasser und anschließende Trocknung des Granulats, dadurch gekennzeichnet, dass das bei der Extraktion des Granulats anfallende Extraktwasser enthaltend ein Gemisch aus Caprolactam und dessen Oligomeren mit frischem Lactam versetzt

wird und anschließend durch Verdampfen des Wasseranteils konzentriert wird und dass das so gewonnene Konzentrat in die Polymerisation zurückgeführt wird, wobei die Temperatur beim Eindampfen des Extraktwassers 120 °C nicht überschreitet, und dass die Konzentration des zyklischen Dimers nach Ende der Polymerisation weniger als 1 Gew.-% beträgt.

Zur Umrechnung der relativen Viskosität in Schwefelsäure in die Viskositätszahl VN sei auf ISO 307 verwiesen.

Als Edukte zur Herstellung der erfindungsgemäß einzusetzenden Polyamide mit einer Viskositätszahl von 130 bis 160 ml/g kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen. Bevorzugte Kettenregler sind Monocarbonsäuren, besonders bevorzugt Essigsäure und Benzoesäure, Dicarbonsäuren, besonders bevorzugt Terephthalsäure, Monoamine, besonders bevorzugt Benzylamin, sowie Diamine.

Besonders bevorzugt sind Polyamid 6, Polyamid 66 und Caprolactam als Comonomer enthaltende Copolyamide. Insbesondere bevorzugt sind statistische, teilkristalline, aliphathische Copolyamide PA 6/66, polymerisiert aus ε-Caprolactam und Hexamethylendiaminadipat.

ε-Caprolactam (CAS-Nummer 105-60-2) wird bevorzugt zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in ε-Caprolactam umgewandelt. Hexamethylendiaminadipat (CAS-Nummer 3323-53-3) ist das Reaktionsprodukt von Adipinsäure und Hexamethylendiamin. Es wird unter anderem auch als Zwischenprodukt bei der Herstellung von Polyamid 66 verwendet. Der Trivialname AH-Salz leitet sich von den Anfangsbuchstaben der Ausgangssubstanzen ab.

Selbstverständlich können auch Mischungen der aufgelisteten Polyamide eingesetzt werden, wobei das Mischungsverhältnis beliebig ist.

Es können außerdem Anteile von rezyklierten Polyamid-Formmassen und / oder Faserrezyklaten enthalten sein.

Als Komponente B) werden 5 bis 45 Gew.-%, besonders bevorzugt 7 bis 40 Gew.-%, ganz besonders bevorzugt 10 bis 20 Gew.-% wenigstens einer Form von Glasfasern eingesetzt. Die Form der erfindungsgemäß einzusetzenden Glasfaser wird bevorzugt ausgewählt aus der Gruppe der E-Glasfasern, A-Glasfasern, C-Glasfasern, D-Glasfasern, S-Glasfasern und / oder R-Glasfasern, insbesondere besonders bevorzugt E-Glasfasern.

Die erfindungsgemäß als Komponente B) einzusetzenden Glasfasern weisen bevorzugt einen Filament-Durchmesser von 6 - 11 μm, besonders bevorzugt einen Filament-Durchmesser von 9 - 11 μm, auf. Die erfindungsgemäß einzusetzenden Glasfasern weisen bevorzugt eine kreisförmige oder ovale Querschnittsfläche auf, besonders bevorzugt eine kreisförmige Querschnittsfläche.

Die als Komponente B) einzusetzenden Glasfasern können in einer alternativen Ausführungsform von flacher Gestalt und nicht-kreisförmiger Querschnittsfläche sein, deren Hauptquerschnittsachse eine Breite im Bereich von 6 - 40 μm und deren Nebenquerschnittsachse eine Breite im Bereich von 3 - 20 μm aufweist.

In einer weiteren bevorzugten Ausführungsform können sowohl kreisförmige oder ovale als auch nicht kreisförmige Glasfasern als Komponente B) nebeneinander eingesetzt werden.

Die als Komponente B) einzusetzenden Glasfasern können als Endlosfasern oder als geschnittene oder gemahlene Glasfasern der erfindungsgemäßen Formmasse zugesetzt werden. Bevorzugt sind die Glasfasern mit einem geeigneten Schlichtesystem ausgerüstet. Für Glasfasern geeignete Schlichtesysteme enthalten bevorzugt folgende Komponenten:

- Haftvermittler, besonders bevorzugt auf Silanbasis
- Filmbildner
- Vernetzer
- Gleitmittel

Bevorzugt werden diese Schlichtesysteme in Form wässriger Polymer-Dispersionen auf die Glasfaser aufgetragen. Besonders bevorzugt werden diese Schlichtesysteme als Haftvermittler für die Komponente B) in Bezug auf die Komponente A) eingesetzt. Ganz besonders bevorzugt wird ein Schlichtesystem auf Silanbasis eingesetzt.

Besonders bevorzugt sind Haftvermittler auf Silanbasis der allgemeinen Formel (I)

$$(X\text{-}(CH_2)_q)_kSi\text{-}(O\text{-}C_rH2_{r+1})_{4\text{-}k} \qquad (I)$$

worin

X für $NH_2$-, HO- oder

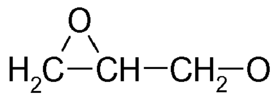

steht,

q für eine ganze Zahl von 2 bis 10, bevorzugt 3 bis 4 steht,

r für eine ganze Zahl von 1 bis 5, bevorzugt 1 bis 2 steht und

k für eine ganze Zahl von 1 bis 3, bevorzugt 1 steht.

Ganz besonders bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Gesamtmenge der Schlichte-Trockenmasse, die als Haftvermittler auf die Glasfaser aufgetragen wird, beträgt bevorzugt 0,05 bis 2 Gew.-%, besonders bevorzugt 0,25 bis 1,5 Gew.-% und ganz besonders bevorzugt 0,5 bis 1 Gew.-% bezogen auf die Glasfaser.

Als Komponente C) werden 5 bis 17 Gew.-%, bevorzugt 8 bis 15 Gew.-%, wenigstens eines Copolymers auf Basis von Ethylen und Butylen eingesetzt, das durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert wurde. Die Herstellung solcher Copolymere wird beispielsweise in US-A 4174358 beschrieben.

Insbesondere bevorzugte Copolymere C) sind mit Maleinsäureanhydrid funktionalisierte Copolymere auf Basis von Ethylen und Butylen, wobei der Maleinsäureanhydrid-Gehalt der funktionalisierten Copolymere bevorzugt 0,1 bis 10 Gew.-%, besonders bevorzugt 0,1 bis 5 Gew.-%, ganz besonders bevorzugt 0,1 bis 2 Gew.-% bezogen auf das gesamte Copolymer beträgt und die Wiederholungseinheiten basierend auf den Monomeren Ethylen und Butylen in einem Verhältnis der Gew.% von 4:6 bis 3:7 im funktionalisierten Copolymer vorliegen.

Die Dichte des einzusetzenden funktionalisierten Copolymers C) beträgt bevorzugt 0,80-0,95 g/$cm^3$, besonders bevorzugt 0,85-0,90 g/$cm^3$. Die Dichte eines Stoffes ist der Quotient aus der Masse und dem Volumen, die Bestimmung der Dichte erfolgt im Rahmen der vorliegenden Erfindung nach DIN 53 479.

Der Volumen-Fließindex MVI des einzusetzenden funktionalisierten Copolymers C) bei 190 °C / 2,16 kg beträgt bevorzugt 1-50 $cm^3$/10min, besonders bevorzugt 5-40 $cm^3$/10min, ganz besonders bevorzugt 10-30 $cm^3$/10min. Bezüglich des MVI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MVI das Volumen einer Probe, das in einer bestimmten Zeit unter festgelegten Bedingungen durch eine Düse gedrückt wird. Dies erfolgt für Thermoplasten nach DIN 53 735 (1988) bzw. ISO 1133-1981. Der MVI dient zur Charakterisierung des Fließverhaltens (Formmassenprüfung) eines Thermoplasten bei bestimmten Druck- und Temperaturbedingungen. Er ist ein Maß für die Viskosität einer Kunststoffschmelze.

Der MVI wird im Rahmen der vorliegenden Erfindung nach ISO 1133 mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen der Polymerschmelze (des sogenannten Extrudats) als Funktion der Zeit. Die Einheit für den MVI ist $cm^3$/10min.

Neben dem Volumen-Fließindex MVI beschreibt ISO 1133-1981 auch den Schmelzindex MFI. Bezüglich des MFI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MFI die Masse einer Probe, die in einer bestimmten Zeit unter festgelegten Bedingungen durch eine Düse gedrückt wird. Die Einheit für den MFI ist g/10min.

Das als Komponente C) einzusetzende funktionalisierte Copolymer kann in einer bevorzugten Ausführungsform auch in Mischung mit wenigstens einem nicht funktionalisierten Copolymer eingesetzt werden. Das Gewichtsverhältnis von funktionalisiertem und nicht-funktionalisiertem Copolymer kann innerhalb eines breiten Bereiches variieren, bevorzugt liegt das Gewichtsverhältnis von funktionalisiertem zu nicht-funktionalisiertem Copolymer im Bereich zwischen 1 : 10 und 10 : 1; besonders bevorzugt ist das Verhältnis geringer als 1, ganz besonders bevorzugt liegt das Verhältnis zwischen 0,9 und 0,1.

Stabilisatoren D) im Sinne der vorliegenden Erfindung sind bevorzugt Thermostabilisatoren, wie sie in Plastics Additives Handbook, 5th Edition, Hanser-Verlag, München, 2001, Seiten 80-84 beschrieben werden, oder UV-Stabilisatoren, wie sie in Plastics Additives Handbook, 5th Edition, Hanser-Verlag, München, 2001, Seiten 352-363 beschrieben werden.

Als Thermostabilisatoren werden bevorzugt Kupfer(I)halogenide, besonders bevorzugt Kupfer(I)chloride, Kupfer(I)bromide, Kupfer(I)jodide in Verbindung mit Halogeniden von Alkalimetallen, bevorzugt Natrium-, Kalium und/oder Lithium-halogenide eingesetzt, wobei Halogenide wiederum bevorzugt für Chlorid, Bromid oder Jodid steht (Kunststoff-Handbuch 3/4, Polyamide, Carl Hanser Verlag, München 1998, Seite 78).

Weiterhin werden bevorzugt sterisch gehinderte Phenole (Kunststoff-Handbuch 3/4, Polyamide, Carl Hanser Verlag, München 1998, Seite 79), Hydrochinone, Phosphite (Kunststoff-Handbuch 3/4, Polyamide, Carl Hanser Verlag, München 1998, Seiten 79, 82), aromatische sekundäre Amine, insbesondere Diphenylamine (Kunststoff-Handbuch 3/4, Polyamide, Carl Hanser Verlag, München 1998, Seite 79), substituierte Resorcine, Salicylate, Benzotriazole oder Benzophenone, sowie verschieden substituierte Vertreter dieser Gruppen oder deren Mischungen, sowie Ruß (Nylon Plastics Handbook, Hanser-Verlag München 1995, Seiten 537-538; Plastics Additives Handbook, 5th Edition, Hanser-Verlag, München, 2001, Seiten 823, 924-925; Elektrisch leitende Kunststoffe, Carl Hanser Verlag, München 1989, 2. Auflage, Seite 21-23) eingesetzt.

Additive E) im Sinne der vorliegenden Erfindung sind Nukleierungsmittel (Plastics Additives Handbook, 5th Edition, Hanser-Verlag, München, 2001, Seiten 949-959, 966; Plastics Additives Handbook, 5th Edition, Hanser-Verlag, München, 2001, Seiten 85-88), Gleit- und Entformungsmittel (Plastics Additives Handbook, 5th Edition, Hanser-Verlag, München, 2001, Seiten 511-541, 546-548), Farbstoffe (Plastics Additives Handbook, 5th Edition, Hanser-Verlag, München, 2001, Seiten 813-818, 872-874) sowie verzweigend oder kettenverlängernd wirkende Additive. Die Additive E) können alleine oder in Mischung bzw. in Form von Masterbatchen eingesetzt werden.

Als Nukleierungsmittel werden bevorzugt Natrium- oder Calciumphenylphosphinat, Aluminiumoxid, Siliziumdioxid sowie besonders bevorzugt Talkum eingesetzt.

Als Gleit- und Entformungsmittel werden bevorzugt Esterwachse, Pentaerytritoltetrastearat (PETS), langkettige Fettsäuren, besonders bevorzugt Stearinsäure oder Behensäure und Ester, deren Salze, insbesondere bevorzugt Ca- oder Zn-Stearat, sowie Amidderivate, bevorzugt Ethylen-bis-stearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt.

Als Farbstoffe werden bevorzugt Nigrosin-Farbstoffe verwendet. Nigrosin-Farbstoffe sind Phenazin-Farbstoffe mit polyzyklischer, aromatischer Struktur, die durch Reaktion von Nitrobenzol und Anilin hergestellt werden.

Bevorzugte Nigrosin-Farbstoffe sind Solvent Black 7 (CAS 8005-02-5), Solvent Black 5 (CAS No.11099-03-9) und Acid Black (CAS 8005-03-6).

Verzweigend oder kettenverlängernd wirkende Additive im Sinne der vorliegenden Erfindung sind bevorzugt epoxidiertes Sojaöl (CAS 8013-07-8) und Glycidylether, besonders bevorzugt Bisphenol A-Diglycidylether.

Die erfindungsgemäßen Polyamid-Formmassen werden durch bekannte Verfahren zu den gewünschten Erzeugnissen, bevorzugt Bauteilen, Formkörpern, Formteilen oder Halbzeugen, verarbeitet, bevorzugt durch Spritzgießen.

Spritzgießverfahren thermoplastischer Polymere zur Herstellung von Erzeugnissen, Bauteilen, Formteilen, Formkörpern oder Halbzeugen arbeiten bei Schmelzetemperaturen im Bereich von 220 bis 330°C, bevorzugt von 230 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Die vorliegende Erfindung betrifft deshalb auch ein Verfahren zur Herstellung von Erzeugnissen, Bauteilen, Formkörpern, Formteilen oder Halbzeugen, dadurch gekennzeichnet, dass man Formmassen, enthaltend

A) 38 bis 90 Gew.-%, bevorzugt 45 bis 85 Gew.-% wenigstens eines Polyamids mit einer Viskositätszahl VN von 125 bis 160 gemäß DIN EN ISO 307 in Schwefelsäure,

B) 5 bis 45 Gew.-%, besonders bevorzugt 7 bis 40 Gew.-%, ganz besonders bevorzugt 10 bis 20 Gew.-% wenigstens einer Form von Glasfasern, und

C) 5 bis 17 Gew.-%, bevorzugt 8 bis 15 Gew.-%, wenigstens eines Copolymers auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind, wobei die Summe aller Gewichtsprozente stets 100 ergibt durch Spritzgießen bei Schmelzetemperaturen im Bereich von 220 bis 330°C sowie gegebenenfalls zusätzlich bei Drücken von maximal 2500 bar verarbeitet.

Durch das erfindungsgemäße Verfahren erzielt man den Effekt, dass Polyamid-basierte Erzeugnisse, bevorzugt Bauteile, Formkörper, Formteile oder Halbzeuge, eine hohe Beständigkeit gegen Heisslichtalterung aufweisen.

Das Verfahren des Spritzgießens wird üblicherweise durchgeführt, indem der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:

1. Plastifizieren / Aufschmelzen

2. Einspritzphase (Füllvorgang)

3. Nachdruckphase (wegen thermischer Kontraktion bei der Kristallisation)

4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung.

Zum Spritzgießen von Polyamiden siehe auch Kunststoff-Handbuch 3/4, Polyamide, Carl Hanser Verlag, München 1998, Seiten 315-352.

Die vorliegende Erfindung betrifft bevorzugt die Verwendung von Copolymeren auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/ oder Ester, insbesondere Maleinsäureanhydrid, Itaconsäure oder Itaconsäureanhydrid, Fumarsäure oder Maleinsäure funktionalisiert worden sind, zur Verbesserung von Erzeugnissen, bevorzugt Formkörpern, Formteilen, Bauteilen oder Halbzeugen, auf Basis von spritzgegossenem Polyamid gegen Einflüsse verursacht durch Heisslichtalterung.

Die vorliegende Erfindung betrifft bevorzugt die Verwendung von Copolymeren auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind zur Verbesserung von Erzeugnissen, bevorzugt Formkörpern, Formteilen, Bauteilen oder Halbzeugen, auf Basis von spritzgegossenem Polyamid gegen Einflüsse verursacht durch Heisslichtalterung wobei im Spritzguss zu deren Herstellung Formmassen enthaltend

A) 38-90 Gew.-% wenigstens eines teilkristallinen, aliphatischen Polyamids mit einer Viskositätszahl VN von 125 bis 160 ml/g gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, des Copolymers eingesetzt werden und die Summe aller Gewichtsprozente stets 100 ergibt.

Bevorzugt betrifft die vorliegende Erfindung die Verwendung von Copolymeren auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind zur Verbesserung von Erzeugnissen, bevorzugt

Formkörpern, Formteilen, Bauteilen oder Halbzeugen, auf Basis von spritzgegossenem Polyamid gegen Einflüsse verursacht durch Heisslichtalterung wobei zu deren Herstellung Formmassen enthaltend

A) 38-90 Gew.-% wenigstens eines teilkristallinen, aliphatischen Polyamids mit einer Viskositätszahl VN von 125 bis 160 ml/g gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, des Copolymers eingesetzt werden und die Summe aller Gewichtsprozente stets 100 ergibt indem man

i) diese Copolymere durch Compoundierung bei Schmelzetemperaturen im Bereich von 250 bis 320 °C in Polyamid zu Formmassen verarbeitet,
ii) diese Formmassen im Spritzgießverfahren auf Spritzgießmaschinen unter Verwendung von Heißkanalsystemen bei Schmelzetemperaturen im Bereich von 250 bis 320 und Werkzeugtemperaturen im Bereich von 40 bis 120 °C zu Erzeugnissen verarbeitet und
iii) diese Erzeugnisse in ihren Anwendungen UV-Licht ausgesetzt sind.

Der Begriff Heisskanalsystem im Zusammenhang mit Compoundierung wird im Kunststoff-Handbuch 3/4, Polyamide, Carl Hanser Verlag, München 1998, Seite 325 erläutert. Gemäß "http://de.wikipedia.org/wiki/Compoundierung" ist Compoundierung ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt überwiegend in Extrudern, bevorzugt in gleichläufigen Doppelschneckenextrudern, gegenläufigen Doppelschneckenextrudern, Planetwalzenextrudern oder Ko-Knetern. Die Compoundierung umfasst die Verfahrensoperationen Fördern, Aufschmelzen, Dispergieren, Mischen, Entgasen und Druckaufbau.
Zweck der Compoundierung ist die Änderung der Teilchengröße, Einarbeitung von Additiven sowie Entfernung von Bestandteilen. Da viele Kunststoffe bei ihrer Herstellung als Pulver oder grobstückige Harze anfallen und diese für die Verarbeitungsmaschinen (Spritzgussmaschinen etc.) nicht direkt einsetzbar sind, ist die Weiterverarbeitung dieser Rohmassen besonders wichtig. Dabei kann es sich aber nicht nur um Rohstoffe, sondern auch in vielen Fällen um Kunststoffabfälle, sogenannte Rezyklate oder Regenerate, handeln.
Die fertige Mischung aus Polymer und Zusatzstoffen nennt man Formmasse. Diese Komponenten der Formmassen können in verschiedenen Aggregatzuständen vorliegen:

- Pulverförmig
- Körnig
- Flüssig / fließfähig

Ziel ist es, die Komponenten mit der Formmasse möglichst homogen zu vermischen.
Bevorzugt wird bei der Compoundierung wenigstens ein Additive der Reihe Antioxidantien, Gleitmittel, Schlagzähmodifikatoren, Antistatika, Kohlenstoff-Fasern, Talkum, Bariumsulfat, Kreide, Thermostabilisatoren, Eisenpulver, Lichtschutzmittel, Trennmittel, Entformungshilfen, Nukleierungsmittel, UV-Absorber, Flammschutzmittel, PTFE, Glasfasern, Ruß, Glaskugeln, Silikon eingesetzt.
Zwecks Vorbereitung des Compoundiervorgangs können zuvor Bestandteile entfernt werden, bevorzugt die Entfernung von Feuchtanteilen (Entfeuchten) oder die Entfernung von niedermolekularen Bestandteilen (Entgasen).
Das Mischen der Komponenten erfolgt entweder als sogenanntes Distributives Mischen oder als sogenanntes Dispersives Mischen. Unter distributivem Mischen versteht man das gleichmäßige Verteilen aller Partikel in der Formmasse. Unter dispersivem Mischen versteht man die Verteilung und Zerkleinerung der einzumischenden Komponenten. Der Mischprozess kann entweder in der viskosen Phase oder in der Feststoffphase durchgeführt werden. Beim Mischen in der Feststoffphase ist der distributive Effekt wichtig, da die Zusatzstoffe schon in zerkleinerter Form vorliegen. Da das Mischen in der Feststoffphase selten ausreicht um eine gute Mischqualität zu erzielen wird häufig vom Vormischen gesprochen. Die Vormischung wird anschließend im Schmelzezustand gemischt.
Das viskose Mischen setzt sich im Allgemeinen aus 5 Teilbereichen zusammen.

- Aufschmelzen des Polymers und der Zusatzstoffe (wenn möglich)
- Zerteilen der Feststoffagglomerate (Agglomerate sind Zusammenballungen)
- Benetzen der Additive mit Polymerschmelze
- gleichmäßiges Verteilen der Komponenten
- Abtrennen unerwünschter Bestandteile (Luft, Feuchte, Lösemittel...)

Beim viskosen Mischen wird die benötigte Wärme hauptsächlich durch die Scherung und Reibung verursacht.

Um die Absorption und Diffusionsvorgänge vom Zusatzstoff auf das Granulatkorn zu verbessern, muss der jeweilige Kunststoff, hier das Polyamid, unter einer höheren Temperatur gemischt werden. Dabei kommt ein Heiz-/Kühlmischersystem zum Einsatz. Das Material wird im Heizmischer gemischt und fließt anschließend in den Kühlmischer, wo es zwischengelagert wird. Auf diese Weise werden Dry Blends hergestellt. Kontinuierliche Mischer kommen hauptsächlich beim viskosen Mischen zum Einsatz. Planetwalzenextruder eignen sich zum Aufbereiten von empfindlichen Materialien bei denen eine exakte Temperaturführung erforderlich ist sowie zum Verarbeiten sehr hoher Füllstoffgrade (bis zu 80 %).

Eine besonders wirkungsvolle Maschine zum Mischen ist der KO- Kneter. Hierbei handelt es sich um einen Einschneckenextruder, der sowohl eine rotatorische als auch eine translatorische (Vor- Zurück) Bewegung ausführt.

Die Aufgabe eines Extruders besteht darin, die ihm zugeführte Kunststoffmasse einzuziehen, zu verdichten, diese gleichzeitig unter Energiezufuhr zu plastifizieren und zu homogenisieren sowie unter Druck einem profilgebenden Werkzeug zuzuführen.

Das Haupteinsatzgebiet eines gleichläufigen Doppelschneckenextruders liegt nach wie vor in der Kunststoffaufbereitung. Er findet aber auch immer mehr in der Kunststoffherstellung und Verarbeitung seine Anwendung. Die Kunststoffaufbereitung wird in folgende Schritte eingeteilt:

- Aufbereiten und Granulieren
- Füllen von Kunststoffen (Talkum, Glasfasern, Kreide)
- Verstärken von Kunststoffen (Glasfasern)

Doppelschneckenextruder mit gleichläufigem Schneckenpaar eignen sich aufgrund der guten Mischung für die Aufbereitung (Compoundierung) von Kunststoffen. Ein gleichläufiger Doppelschneckenextruder wird in mehrere Verfahrenszonen eingeteilt. Diese Zonen sind miteinander gekoppelt und können nicht unabhängig voneinander betrachtet werden. So läuft z.B. das Einarbeiten von Fasern in die Schmelze, nicht nur in der vorbestimmten Dispergierzone ab, sondern auch in der Austragszone und in anderen Schneckengängen.

Da die meisten Verarbeiter den Kunststoff als Granulat benötigen, spielt das Granulieren eine immer wichtigere Rolle. Man unterscheidet grundsätzlich zwischen Heiß- und Kaltabschlag, je nach Verarbeitung resultieren daraus verschiedene Kornformen:

- Perlen oder Linsenkornform in Falle eines Heißabschlags
- Zylinder oder Würfelformen im Falle eines Kaltabschlags

Beim Heißabschlag wird der Extrusionsstrang direkt nach der Düse, durch ein mit Wasser überströmtes, rotierendes Messer abgehackt. Das Wasser verhindert dabei das Zusammenkleben der einzelnen Granulatkörner und kühlt das Material ab. Bevorzugt wird zur Kühlung Wasser verwendet, aber es kann auch Luft verwendet werden. Die Auswahl des richtigen Kühlmittels ist daher Werkstoffabhängig. Der Nachteil einer Wasserkühlung ist, dass das Granulat anschließend getrocknet werden muss. Beim Kaltabschlag werden die Stränge zuerst durch ein Wasserbad gezogen und anschließend im festen Zustand durch eine rotierende Messerwalze (Granulator) in die gewünschte Länge geschnitten.

Die erfindungsgemäß durch Spritzguß herzustellenden und in ihrem Verhalten bezüglich Heißlichtalterung gegenüber dem Stand der Technik verbesserten Erzeugnisse, bevorzugt Formkörper, Formteile, Bauteile oder Halbzeuge, werden bevorzugt in der Fahrzeugindustrie, besonders bevorzugt in der Kraftfahrzeugindustrie, insbesondere zur Herstellung von Fensterrahmenverkleidungen für Kraftfahrzeuge verwendet.

Die vorliegende Erfindung betrifft deshalb auch Erzeugnisse, bevorzugt Formkörper, Formteile, Bauteile oder Halbzeuge, erhältlich durch Einsatz der erfindungsgemäßen Formmassen im Spritzguß.

Die vorliegende Erfindung betrifft insbesondere Formmassen enthaltend

A) 38 bis 90 Gew.-%, bevorzugt 45 bis 85 Gew.-%, Copolyamid PA 6/66 (polymerisiert aus 95 Gew.-% $\varepsilon$-Caprolactam und 5 Gew.-% Hexamethylendiaminadipat) mit einer Viskositätszahl VN gemäß DIN EN ISO 307 in Schwefelsäure von 146 ml/g,
B) 5 bis 45 Gew.-%, besonders bevorzugt 7 bis 40 Gew.-%, ganz besonders bevorzugt 10 bis 20 Gew.-% mit silanhaltigen Verbindungen beschichtete E-Glasfaser, bevorzugt mit einem Filament-Durchmesser von 11 $\mu$m, und
C) 5 bis 17 Gew.-%, bevorzugt 8 bis 15 Gew.-%, Ethylen-Butylen-Copolymer enthaltend 0,7 Gew.-% gepfropftes Maleinsäureanhydrid,

wobei die Summe aller Gewichtsprozente stets 100 ergibt.

Die vorliegende Erfindung betrifft ferner die Verwendung von Ethylen-Butylen-Copolymer, bevorzugt enthaltend

0,7 Gew.-% gepfropftes Maleinsäureanhydrid zur Verhinderung der Heisslichtalterung Polyamid-basierter Erzeugnisse, bevorzugt Polyamid-basierter Erzeugnisse aus Formmassen enthaltend

A) 38-90 Gew.-% Copolyamid PA 6/66 - polymerisiert aus 95 Gew.-% ε-Caprolactam und 5 Gew.-% Hexamethylendiaminadipat - mit einer Viskositätszahl VN gemäß DIN EN ISO 307 in Schwefelsäure von 146 ml/g und
B) 5 bis 45 Gew.-%, besonders bevorzugt 7 bis 40 Gew.-%, ganz besonders bevorzugt 10 bis 20 Gew.-% mit silanhaltigen Verbindungen beschichtete E-Glasfaser, bevorzugt mit einem Filament-Durchmesser von 11 μm, durch Spritzguss hergestellt werden, wobei die Summe aller Gewichtsprozente aus Copolymer, Komponente A) und Komponente B) in den Formmassen stets 100 ergibt.

Bevorzugt werden hierfür 5 bis 17 Gew.-%, besonders bevorzugt 8 bis 15 Gew.-%, des Ethylen-Butylen-Copolymers eingesetzt, wobei die Summe aller Gewichtsprozente in den Formmassen stets 100 ergibt.
In einer bevorzugten Ausführungsform enthalten die erfindungsgemäßen Formmassen zusätzlich zu den Komponenten A), B) und C) noch D) 0,1-2,0 Gew.-%, besonders bevorzugt 0,5-1,5 Gew.-% CuI/KBr-Mischung als Thermostabilisator, wobei die Summe aller Gewichtsprozente stets 100 ergibt indem die Mengen von einer oder mehrerer der Komponenten A), B) und/oder C) entsprechend reduziert werden.
In einer weiteren bevorzugten Ausführungsform enthalten die erfindungsgemäßen Formmassen zusätzlich zu den Komponenten A), B), C) und D) oder anstelle von D) noch zusätzlich 0,1-4 Gew.-%, besonders bevorzugt 0,2-2,0 Gew.-% wenigstens eines Additivs E), wobei die Summe aller Gewichtsprozente stets 100 ergibt und als Additiv Talkum und/oder Nigrosin eingesetzt werden.
Auch aus JP 2011 208127 A, JP 2005 298578 A, EP 0 997 496 A1 und CN 101 760 003 A sind vereinzelte Stoffkombinationen bekannt, die im Rahmen der vorliegenden Erfindung ebenfalls für den Einsatz in Formmassen geeignet wären, um daraus herzustellende Erzeugnisse gegen Heisslichtalterung zu schützen.

## Beispiele

Zum Nachweis der erfindungemäß beschriebenen Verbesserungen in Bezug auf die Heisslichtalterung spritzgegossener Erzeugnisse wurden zunächst durch Compoundierung entsprechende Polyamid-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 260 und 300°C gemischt, als Strang in ein Wasserbad ausgetragen, bis zur Granulierfähigkeit abgekühlt und granuliert.
Der Spritzguss von Prüfkörpern 60x60x2 mm der erfindungsgemäßen Formmasse der Beispiele 1 und 2 sowie der Formmassen der Vergleichsbeispiele 1 und 2 erfolgte auf einer Spritzgießmaschine des Typs ARBURG-520 C 200 - 350 bei einer Massetemperatur von 260 °C und einer Werkzeugtemperatur von 80 °C.
Die Ermittlung der Beständigkeit gegen Heisslichtalterung erfolgte gemäß VDA 75 202-3 A4 in einem Xenotester® Ci 5000 von Atlas Material Testing Technology GmbH, Linsengericht, Deutschland unter den folgenden, den Expositionsbedingungen A der VDA 75 202 konformen Bedingungen:

1. Xenon-Bogen-Lampe, wassergekühlt

2. Boro/SI-Filter

3. Bestrahlungsstärke: 60 W/m$^2$

4. Probenraum-Temperatur: 65 °C

5. Schwarzstandard-Temperatur: 100 °C

6. Relative Luftfeuchte im Probenraum: 30 %

Proben der zu untersuchenden Materialien wurden unter den oben genannten Bedingungen mit einer Typfärbung 6 des Lichtechtheitsmaßstabes nach DIN EN ISO105-B01 auf einem Probenhalter befestigt, in den Xenotester® Ci 5000 eingesetzt und einer Heisslichtalterung ausgesetzt. Lichtechtheitsmaßstäbe nach DIN EN ISO105-B01 bestehen aus einer Reihe von genormten Typfärbungen mit blauen Farbstoffen auf Wollgewebe, die nach steigender Lichtechtheit geordnet und mit den Zahlen 1 (niedrige Lichtechtheit) bis 8 (sehr hohe Lichtechtheit) bezeichnet sind.
Es erfolgten vier Belichtungsperioden. Für jede Belichtungsperiode wurde eine neue Typfärbung 6 des Lichtechtheitsmaßstabes mitgeprüft. Die Belichtung wurde nur zur Kontrolle des Lichtechtheitsmaßstabes unterbrochen.
Das Ende einer Belichtungsperiode wurde jeweils erreicht, wenn ein a,b-Farbabstand $\Delta E_{ab}$*

$$\Delta E_{ab}^* = 4{,}3 \text{ +/- } 0{,}4 \text{ (D65/10°)}$$

erreicht wurde (Vergleich Lichtechtheitsmaßstabes nach Heisslichtalterung im Vergleich zum Ausgangszustand des Lichtechtheitsmaßstabes vor Heisslichtalterung) und die Farbmessung gemäß DIN 6167 (Normlichtart D65, Normalbeobachter 10°) mit einem Spectrophometer CM-2600d von Konica Minolta erfolgte.

Die 1. Belichtungsperiode dauerte 84 Stunden, nach dieser Zeit betrug der Farbabstand $\Delta E_{ab}^*$ = 4,0.
Die 2. Belichtungsperiode dauerte 84 Stunden, nach dieser Zeit betrug der Farbabstand $\Delta E_{ab}^*$ = 4,0.
Die 3. Belichtungsperiode dauerte 84 Stunden, nach dieser Zeit betrug der Farbabstand $\Delta E_{ab}^*$ = 4,2.
Die 4. Belichtungsperiode dauerte 84 Stunden, nach dieser Zeit betrug der Farbabstand $\Delta E_{ab}^*$ = 4,1.

An den Probekörpern wurde vor Heisslichtalterung und nach zwei beziehungsweise vier Belichtungsperioden (VDA 75202-3 A4, Verfahren 3) eine Farbmessung gemäß DIN 6167 (Normlichtart D65, Normalbeobachter 10°) mit einem Spectrophometer CM-2600d von Konica Minolta durchgeführt und jeweils der a,b-Farbabstand $\Delta E_{ab}^*$ nach zwei beziehungsweise vier Belichtungsperioden im Vergleich zum Ausgangszustand vor Heisslichtalterung bestimmt.

**Tabelle 1**: Ausführungsbeispiele

| In der folgenden Tabelle sind die Mengen der Einsatzstoffe in Gew.-% und die erfindungsgemäßen Effekte angegeben. | | | | | |
|---|---|---|---|---|---|
| | | **Beispiel 1** | **Beispiel 2** | **Vergleich 1** | **Vergleich 2** |
| Copolyamid 1) | [%] | 68,95 | 0 | 68,95 | 0 |
| Polyamid 6 2) | [%] | 0 | 75,46 | 0 | 0 |
| Polyamid 6 3) | [%] | 0 | 0 | 0 | 70,68 |
| Glasfaser 4) | [%] | 15 | 15 | 15 | 15 |
| Schlagzähmodifikator 5) | [%] | 15 | 8,5 | 0 | 13 |
| Ethylen-Propylen-Copolymer 6) | [%] | 0 | 0 | 15 | 0 |
| Stabilisatoren 7) | [%] | 0,85 | 0,85 | 0,85 | 0,94 |
| Additive 8) | [%] | 0,2 | 0,19 | 0,2 | 0,38 |
| Farbmessung DIN 6167 D65 10° vor Heisslichtalterung: | | | | | |
| L* | | 26,38 | 25,81 | 25,82 | 26,38 |
| a* | | -0,01 | -0,02 | 0,01 | 0,03 |
| b* | | -0,63 | -0,71 | -0,65 | -0,41 |
| Farbmessung gemäß DIN 6167 D65 10° nach 2 Belichtungsperioden Heisslichtalterung VDA75202-3A: | | | | | |
| L* | | 26,73 | | 26,35 | 26,97 |
| a* | | -0,02 | | -0,03 | 0 |
| b* | | -0,65 | | -0,75 | -0,55 |
| a,b-Farbabstand $\Delta E_{ab}^*$ nach 2 Belichtungsperioden im Vergleich zum Ausgangszustand vor Heisslichtalterung | | 0,35 | | 0,54 | 0,60 |
| Farbmessung gemäß DIN 6167 D65 10° nach 4 Belichtungsperioden Heisslichtalterung VDA75202-3A: | | | | | |
| L* | | 26,93 | 26,21 | 26,61 | 27,04 |
| a* | | -0,05 | -0,08 | -0,02 | 0,02 |

(fortgesetzt)

| In der folgenden Tabelle sind die Mengen der Einsatzstoffe in Gew.-% und die erfindungsgemäßen Effekte angegeben. | | | | | |
|---|---|---|---|---|---|
| | | **Beispiel 1** | **Beispiel 2** | **Vergleich 1** | **Vergleich 2** |
| b* | | -0,64 | -0,88 | -0,64 | -0,4 |
| a,b-Farbabstand $\Delta E_{ab}$* nach 4 Belichtungsperioden im Vergleich zum Ausgangszustand vor Heisslichtalterung | | 0,55 | 0,44 | 0,78 | 0,65 |

1) Copolyamid PA 6/66 mit einer Viskositätszahl VN gemäß DIN EN ISO 307 in Schwefelsäure von 146, wobei die Monomerbausteine ε-Caprolactam und Hexamethylendiaminadipat in einem Verhältnis von 95 Gew.-% zu 5 Gew.-% vorliegen
2) Polyamid 6 mit einer Viskositätszahl VN gemäß DIN EN ISO 307 in Schwefelsäure von 150
3) Polyamid 6 mit einer Viskositätszahl VN gemäß DIN EN ISO 307 in Schwefelsäure von 124
4) Mit silanhaltigen Verbindungen beschichtete E-Glasfaser mit einem Filament-Durchmesser von 11 μm
5) Ethylen-Butylen-Copolymer enthaltend 0,7 Gew.-% gepfropftes Maleinsäureanhydrid (MVI: 20 $cm^3$/10 min (190 °C / 2,16 kg), Dichte 0,88 g/$cm^3$), Schmelzpunkt 48 °C
6) Ethylen-Propylen-Copolymer enthaltend 0,7 Gew.-% gepfropftes Maleinsäureanhydrid (MVI: 5 $cm^3$/10 min (190 °C / 2,16 kg), Dichte 0,87 g/$cm^3$)
7) CuI/KBr-Mischung (Molverhältnis 1:4,5), Ruß
8) Entformungsmittel

Die Formmassen der erfindungsgemäßen Beispiele 1 und 2 zeigen einen geringeren a,b-Farbabstand $\Delta E_{ab}$* nach 2 beziehungsweise 4 Belichtungsperioden Heisslichtalterung VDA 75202-3A und damit eine höhere Beständigkeit gegen Heisslichtalterung als Vergleichsbeispiele 1 und 2.

## Patentansprüche

**1.** Formmassen, enthaltend die Kombination von

A) 38-90 Gew.-% wenigstens eines Polyamids mit einer Viskositätszahl VN von 130 bis 160 ml/g gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, eines Schlagzähmodifikators auf Basis von Copolymeren von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind, wobei die Summe der Gewichtsprozente aus A), B), und C) stets 100 ergibt.

**2.** Formmassen gemäß Anspruch 1, die neben den Komponenten A), B) und C) zusätzlich noch 0,1-2,0 Gew.-%, besonders bevorzugt 0,5-1,5 Gew.-% wenigstens eines Stabilisators D) enthalten wobei die Mengen von einer oder mehrerer der Komponenten A), B) und C) so reduziert werden, dass die Summe aller Gewichtsprozente in der Formmasse stets 100 ergibt.

**3.** Formmassen gemäß den Ansprüchen 1 oder 2, **dadurch gekennzeichnet, dass** diese neben den Komponenten A), B), C) und D) oder anstelle von D) 0,1-4 Gew.-%, bevorzugt 0,2-2,0 Gew.-% wenigstens eines sonstigen Additivs E) enthalten wobei die Mengen von einer oder mehrerer der Komponenten A), B), C) und/oder D) so reduziert werden, dass die Summe aller Gewichtsprozente in der Formmasse stets 100 ergibt.

**4.** Formmassen gemäß einem der Ansprüche 1 bis 3, **dadurch gekennzeichnet, dass** das Polyamid A) polymerisiert aus ε-Caprolactam und Hexamethylendiaminadipat, mindestens zu 90 Gew.% aus ε-Caprolactam besteht.

**5.** Formmassen gemäß einem der Ansprüche 1 bis 4, **dadurch gekennzeichnet, dass** der Maleinsäureanhydrid-Gehalt des funktionalisierten Copolymers C) 0,1 bis 10 Gew.-%, bevorzugt 0,1 bis 5 Gew.-%, besonders bevorzugt

0,1 bis 2 Gew.-% bezogen auf das gesamte Copolymer beträgt und die Wiederholungseinheiten basierend auf den Monomeren Ethylen und Butylen in einem Verhältnis der Gew.% von 4:6 bis 3:7 im funktionalisierten Copolymer vorliegen.

6. Formmassen gemäß einem der Ansprüche 1 bis 5, **dadurch gekennzeichnet, dass** das als Komponente C) einzusetzende funktionalisierte Copolymer in Mischung mit wenigstens einem nicht funktionalisierten Copolymer eingesetzt wird.

7. Formmassen gemäß Anspruch 6, **dadurch gekennzeichnet, dass** das Gewichtsverhältnis von funktionalisiertem und nicht-funktionalisiertem Copolymer im Bereich zwischen 1 : 10 und 10 : 1 liegt.

8. Formmassen gemäß einem der Ansprüche 1 bis 7, **dadurch gekennzeichnet, dass** diese die Kombination von

A) 38 bis 90 Gew.-%, bevorzugt 45 bis 85 Gew.-% Copolyamid PA 6/66 - polymerisiert aus 95 Gew.-% ε-Caprolactam und 5 Gew.-% Hexamethylendiaminadipat - mit einer Viskositätszahl VN gemäß DIN EN ISO 307 in Schwefelsäure von 146 ml/g,
B) 5 bis 45 Gew.-%, besonders bevorzugt 7 bis 40 Gew.-%, ganz besonders bevorzugt 10 bis 20 Gew.-% mit silanhaltigen Verbindungen beschichtete E-Glasfaser, bevorzugt mit einem Filament-Durchmesser von 11 μm, und
C) 5 bis 17 Gew.-%, bevorzugt 8 bis 15 Gew.-%, Ethylen-Butylen-Copolymer enthaltend 0,7 Gew.-% gepfropftes Maleinsäureanhydrid, wobei die Summe Gewichtsprozente von A), B) und C) stets 100 ergibt, enthalten.

9. Verfahren zur Herstellung von Erzeugnissen, bevorzugt Bauteilen, Formkörpern, Formteilen oder Halbzeugen, **dadurch gekennzeichnet, dass** man Formmassen, enthaltend die Kombination von

A) 38 bis 90 Gew.-%, bevorzugt 45 bis 85 Gew.-%, wenigstens eines Polyamids mit einer Viskositätszahl VN von 130 bis 160 gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, eines Schlagzähmodifikators auf Basis von Copolymeren von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind, wobei die Summe der Gewichtsprozente von A), B) und C) stets 100 ergibt, durch Spritzgießen bei Schmelzetemperaturen im Bereich von 220 bis 330°C sowie gegebenenfalls zusätzlich bei Drücken von maximal 2500 bar verarbeitet.

10. Verwendung von Copolymeren auf Basis von Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure oder Itaconsäureanhydrid, Fumarsäure oder Maleinsäure funktionalisiert worden sind zur Verbesserung von Erzeugnissen, bevorzugt Formkörpern, Formteilen, Bauteilen oder Halbzeugen, auf Basis von spritzgegossenem Polyamid gegen Einflüsse verursacht durch Heisslichtalterung wobei im Spritzguss zu deren Herstellung Formmassen enthaltend die Kombination von

A) 38-90 Gew.-% wenigstens eines Polyamids mit einer Viskositätszahl VN von 130 bis 160 ml/g gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, des Copolymers eingesetzt werden und die Summe der Gewichtsprozente von A), B) und C) stets 100 ergibt.

11. Verwendung gemäß Anspruch 10, **dadurch gekennzeichnet, dass** man

i) diese Copolymere durch Compoundierung bei Schmelzetemperaturen im Bereich von 250 bis 320 °C in Polyamid zu Formmassen verarbeitet,
ii) diese Formmassen im Spritzgießverfahren auf Spritzgießmaschinen unter Verwendung von Heißkanalsystemen bei Schmelzetemperaturen im Bereich von 250 bis 320 °C und Werkzeugtemperaturen im Bereich von 40 bis 120 °C zu Erzeugnissen verarbeitet und
iii) diese Erzeugnisse in ihren Anwendungen UV-Licht aussetzt.

**12.** Verwendung gemäß der Ansprüche 10 oder 11, **dadurch gekennzeichnet, dass** das Ethylen-Butylen-Copolymer in Formmassen enthaltend die Kombination von

A) 38 bis 90 Gew.-%, bevorzugt 45 bis 85 Gew.-% wenigstens eines teilkristallinen Polyamids mit einer Viskositätszahl VN von 130 bis 160 ml/g gemäß DIN EN ISO 307 in Schwefelsäure,
B) 5 bis 45 Gew.-%, besonders bevorzugt 7 bis 40 Gew.-%, ganz besonders bevorzugt 10 bis 20 Gew.-% wenigstens einer Form von Glasfasern, und
C) 5 bis 17 Gew.-%, bevorzugt 8 bis 15 Gew.-%, des Copolymers eingesetzt wird und die Summe der Gewichtsprozente von A), B) und C) stets 100 ergibt.

**13.** Verwendung gemäß einem der Ansprüche 10 bis 12, **dadurch gekennzeichnet, dass** das Ethylen-Butylen-Copolymer 0,7 Gew.-% gepfropftes Maleinsäureanhydrid enthält.

**14.** Verwendung gemäß einem der Ansprüche 12 oder 13, **dadurch gekennzeichnet, dass** es sich um Formmassen enthaltend die Kombination von Copolymer mit

A) 38-90 Gew.-% Copolyamid PA 6/66 - polymerisiert aus 95 Gew.-% ε-Caprolactam und 5 Gew.-% Hexamethylendiaminadipat - mit einer Viskositätszahl VN gemäß DIN EN ISO 307 in Schwefelsäure von 146 ml/g und
B) 5 bis 45 Gew.-%, mit silanhaltigen Verbindungen beschichtete E-Glasfaser, bevorzugt mit einem Filament-Durchmesser von 11 μm, wobei die Summe der Gewichtsprozente aus Copolymer, Komponente A) und Komponente B) stets 100 ergibt, handelt.

**15.** Verwendung gemäß einem der Ansprüche 10 bis 12, **dadurch gekennzeichnet, dass** es sich bei den Erzeugnissen um Bauteile, Formkörper, Formteile oder Halbzeuge in der Fahrzeugindustrie, bevorzugt in der Kraftfahrzeugindustrie, insbesondere zur Herstellung von Fensterrahmenverkleidungen für Kraftfahrzeuge handelt.

**16.** Erzeugnisse, bevorzugt Bauteile, Formkörper, Formteile oder Halbzeuge, erhältlich aus Formmassen gemäß einem der Ansprüche 1 bis 8.

Europäisches Patentamt
European Patent Office
Office européen des brevets

# EUROPÄISCHER RECHERCHENBERICHT

Nummer der Anmeldung
EP 13 18 8070

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | JP 2011 208127 A (TORAY INDUSTRIES; HONDA MOTOR CO LTD) 20. Oktober 2011 (2011-10-20) * Zusammenfassung; Ansprüche 1-6; Absätze 2-3; 44-51; 55-57; 61-62; 82; 84-85 und 96-97 (Tabellen 1-2) * ----- | 1-3,5-7, 9,16 | INV. C08L77/00 C08L77/02 ADD. C08L23/26 C08L51/06 C08F255/02 |
| X | JP 2005 298578 A (ASAHI CHEMICAL CORP) 27. Oktober 2005 (2005-10-27) * Zusammenfassung; Ansprüche 1-6; Absätze 8, 9-12, 27-28, 32-34 und 48-49 (Tabellen 1-2) * ----- | 1-3,5-7, 9,16 | |
| X | EP 0 997 496 A1 (TORAY INDUSTRIES [JP]) 3. Mai 2000 (2000-05-03) * Ansprüche 1-20; Absätze 1, 13-18, 35, 62-63 und 67-70 (Tabellen 1-6) * ----- | 1-3,5-7, 9,16 | |
| A | CN 101 760 003 A (SHANGHAI PRET COMPOSITES CO LT) 30. Juni 2010 (2010-06-30) * Zusammenfassung; Absätze 16-45 (Beispiele) * ----- | 1-16 | RECHERCHIERTE SACHGEBIETE (IPC) C08L C08F |

Der vorliegende Recherchenbericht wurde für alle Patentansprüche erstellt

1

| Recherchenort | Abschlußdatum der Recherche | Prüfer |
|---|---|---|
| München | 17. Dezember 2013 | Okunowski, Françoise |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 18 8070

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2013

| Im Recherchenbericht angeführtes Patentdokument | Datum der Veröffentlichung | Mitglied(er) der Patentfamilie | Datum der Veröffentlichung |
|---|---|---|---|
| JP 2011208127 A | 20-10-2011 | KEINE | |
| JP 2005298578 A | 27-10-2005 | KEINE | |
| EP 0997496 A1 | 03-05-2000 | CN 1253971 A | 24-05-2000 |
| | | DE 69930076 T2 | 02-11-2006 |
| | | EP 0997496 A1 | 03-05-2000 |
| | | KR 20000029290 A | 25-05-2000 |
| | | US 2001018485 A1 | 30-08-2001 |
| CN 101760003 A | 30-06-2010 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5705565 A
- WO 9960062 A1
- DE 19801267 A1
- US 4174358 A
- JP 2011208127 A
- JP 2005298578 A
- EP 0997496 A1
- CN 101760003 A


### In der Beschreibung aufgeführte Nicht-Patentliteratur


- Kunststoff-Handbuch 3/4, Polyamide. Carl Hanser Verlag, 1998, vol. 16, 82-84
- Nylon Plastics Handbook. Hanser-Verlag, 1995, 340-342
- Nylon Plastics Handbook. Hanser-Verlag, 1995, 537-538
- Nylon Plastics Handbook. Hanser-Verlag, 1995, 415-422
- Kunststoff-Handbuch 3/4, Polyamide. Carl Hanser Verlag, 1998, vol. 3-4, 16, 133-138
- Nylon Plastics Handbook. Hanser-Verlag, 1995, 415-419
- Nylon Plastics Handbook. Hanser-Verlag, 1995, 17-27
- Kunststoff-Handbuch 3/4, Polyamide. Carl Hanser Verlag, 1998, vol. 3-4, 22-36
- Kunststoff-Handbuch 3/4, Polyamide. Carl Hanser Verlag, 1998, vol. 3-4, 25-3665-73
- Plastics Additives Handbook. Hanser-Verlag, 2001, 80-84
- Plastics Additives Handbook. Hanser-Verlag, 2001, 352-363
- Kunststoff-Handbuch 3/4, Polyamide. Carl Hanser Verlag, 1998, vol. 3-4, 78
- Kunststoff-Handbuch 3/4, Polyamide. Carl Hanser Verlag, 1998, 79
- Hydrochinone, Phosphite (Kunststoff-Handbuch 3/4, Polyamide. Carl Hanser Verlag, 1998, 79, 82
- Plastics Additives Handbook. Hanser-Verlag, 2001, 823, 924-925
- Elektrisch leitende Kunststoffe. Carl Hanser Verlag, 1989, 21-23
- Plastics Additives Handbook. Hanser-Verlag, 2001, 949-959966
- Plastics Additives Handbook. Hanser-Verlag, 2001, 85-88
- Plastics Additives Handbook. Hanser-Verlag, 2001, 511-541546-548
- Plastics Additives Handbook. Hanser-Verlag, 2001, 813-818872-874
- Kunststoff-Handbuch 3/4, Polyamide. Carl Hanser Verlag, 1998, vol. 3-4, 315-352
- Kunststoff-Handbuch 3/4, Polyamide. Carl Hanser Verlag, 1998, vol. 3-4, 325